(19) Europäisches Patentamt
European Patent Office
Office européen des brevets

(11) **EP 1 532 207 B1**

(12) **EUROPEAN PATENT SPECIFICATION**

(45) Date of publication and mention of the grant of the patent:
**29.12.2010 Bulletin 2010/52**

(51) Int Cl.:
*C08L 77/00* (2006.01)    *C08L 51/00* (2006.01)
*C08K 3/00* (2006.01)    *C08K 3/16* (2006.01)
*C08F 259/08* (2006.01)

(21) Application number: **03749402.8**

(22) Date of filing: **28.08.2003**

(86) International application number:
**PCT/US2003/027690**

(87) International publication number:
**WO 2004/020524 (11.03.2004 Gazette 2004/11)**

(54) **POLYAMIDE COMPOSITIONS INCORPORATING NON-MELT-PROCESSABLE FLUOROPOLYMERS AND PROCESSES ASSOCIATED THEREWITH**

POLYAMIDMISCHUNGEN ENTHALTENDE NICHT BEARBEITBARE FLOUROPOLYMERE UND DAMIT VERBUNDES VERFAHREN

COMPOSITIONS EN POLYAMIDE A FLUOROPOLYMERES NE SE PRETANT PAS AU TRAITEMENT PAR FUSION, ET PROCEDES CORRESPONDANTS

(84) Designated Contracting States:
**BE DE FR GB IT**

(30) Priority: **28.08.2002 US 406415 P**

(43) Date of publication of application:
**25.05.2005 Bulletin 2005/21**

(73) Proprietor: **E.I. DU PONT DE NEMOURS AND COMPANY**
**Wilmington, DE 19898 (US)**

(72) Inventors:
• **MARTENS, Marvin, Michael**
**Vienna, WV 26105 (US)**
• **JONES, Gloria, Jean**
**Washington, WV 26181 (US)**
• **JONES, Clay, Woodward**
**Washington, WV 26181 (US)**

(74) Representative: **Morf, Jan Stefan**
**Abitz & Partner**
**Patentanwälte**
**Postfach 86 01 09**
**81628 München (DE)**

(56) References cited:
EP-A- 0 735 093    EP-A- 0 758 010
EP-A- 0 829 494    WO-A-02/072653
US-A- 4 785 050    US-A- 4 952 630

• "ISOPAR K FLUID, Product Properties" In: February 2004 (2004-02), ExxonMobile Chemical , South/Central America
• "ISOPAR K, Material Safety Data Sheet" In: 19 September 2000 (2000-09-19), ExxonMobil Lubricants & Petroleum Specialities , Fairfax, VA, USA , pages 1-7

Remarks:
The file contains technical information submitted after the application was filed and not included in this specification

**Description**

**Field of the Invention**

The present invention relates to novel non-melt-processable and fibrillating fluoropolymers and their use as additives that lower the melt viscosity of reinforced, flame-retarded polyamide compositions and act as drip suppressants upon combustion, together with processes for their preparation. More particularly, the present invention relates to polyamide compositions incorporating such fluoropolymers and articles made therefrom.

**Background of the Invention**

Polyamides are easily-processed polymer resins with excellent physical properties such as toughness and solvent and heat resistance. These properties are often augmented by the use of additives. Consequently, polyamides are used to produce a wide variety of useful articles through injection molding, blow molding, and other melt-processing methods.

The addition of fillers such as glass fibers and minerals can increase the stiffness and otherwise improve the physical properties of parts made from these resins, but the presence of these additives can also have the often unwanted side-effect of increasing the melt viscosity of the compounded resin mixtures. Compounded resins that have both relatively low melt viscosities and good physical properties are highly desirable. When molten, such materials will fill a mold quickly, which leads to fast cycle times and hence confers an economic advantage. In addition, such materials are more easily molded into complex parts made from intricate molds.

The addition of flame retardants to polyamides is common and such flame retarded compositions have myriad applications. Flame retardants only serve to quickly quench a burning material; however, while combustion is in progress, the molten material can drip and ignite neighboring objects. Thus, it is desirable to also add a drip suppressant to a flame-retarded composition.

A flame-retarded polymer additive that would both serve to lower the melt viscosity of the composition and suppress dripping upon combustion would be highly desirable.

PCT Publication No. 00/69967 describes a polymer processing aid comprising a melt-processable multimodal fluoropolymer. Examples are given that demonstrate the additive's efficacy in reducing melt defects in blow-molded hydrocarbon polymers. It is not shown to reduce the melt viscosity of a polyamide or serve as a drip suppressant.

European Patent Application No. 0 758 010 A1 describes a fluoropolymer anti-drip agent for flammable thermoplastic resins. This material comprises fine particles possessing a core-shell structure whose core is a fibrillating high molecular weight polytetrafluoroethylene and whose shell is a non-fibrillating low molecular weight polytetrafluoroethylene. While this material conveys anti-drip properties to a flammable thermoplastic resin and improves the mold-releasing properties of the resin, it is not shown to lower the melt viscosity of such a blend.

PCT Publication No. 01/2197 A1 describes a processing aid that comprises two co-coagulated fluorine-containing polymer components. Preferred polymers for each of the components are copolymers containing at least 5 weight percent vinylidene fluoride. This invention is particularly useful as a processing aid that lowers melt defects in films blown from polymers formed by the homo- or copolymerization of olefins, but has the drawback that it requires the step of preparing the co-coagulated product. It is not shown to reduce the melt viscosity of a polyamide or serve as a drip suppressant.

Romanian Patent No. 88741 describes a composition consisting of polyamide 6 or polyamide 6,6, glass fiber, and an internal lubricant, which can consist of polytetrafluoroethylene, that is designed to produce parts that are resistant to mechanical stress. This composition is not demonstrated to lower the melt viscosity of the blend or to impart anti-drip properties.

It is an object of the present invention to provide polyamide compositions containing an additive that will both suppress the dripping from a burning material and lower the melt viscosity of the composition during processing. A feature of the present invention is to incorporate such an additive with a unique core-shell structure. It is an advantage of the present invention to provide articles made from these polyamide compositions which are molded using any of a variety of conventional approaches. These and other objects, features and advantages will become better understood upon having reference to the detailed description herein.

**Summary of the Invention**

There is disclosed and claimed herein polyamide molding compositions having lowered melt viscosities comprising, in weight percent, about

(a) 25 to 90% of a polyamide or polyamide blend;

(b) 5 to 60% of an inorganic filler or reinforcing agent;

(c) about 0.1 to 10% of non-melt-processible fluoropolymer particles having a standard specific gravity (SSG) of less than about 2.225, said fluoropolymer particles comprising a core of high molecular weight polytetrafluoroethylene and a shell of lower molecular weight polytetrafluoroethylene or modified polytetrafluoroethylene;

(d) 5 to 35% of a flame-retarding additive containing 50-70% bromine or chlorine; and

(e) 1 to 10% of a flame retardant synergist,

wherein said particles are fibrillating? as defined in claim 1.

Further disclosed is a batch process for producing non-melt-processible fluoropolymers as used in the above described polyamide compositions, comprising polymerizing tetrafluoroethylene in an aqueous medium in the presence a dispersing agent to produce polytetrafluoroethylene having an SSG of less than 2.225. The polymerization is carried out in two stages. During a first stage, a first amount of free radical initiator is added and during a second stage, a second amount of free radical initiator and a telogenic agent are added. The first amount of initiator produces polytetrafluoroethylene having an average melt creep viscosity greater than about $1.2 \times 10^{10}$ Pa-s, and the second amount of initiator is at least about 10 times the first amount and being added before about 95% of the total tetrafluoroethylene has been polymerized, and with the second amount of initiator producing polytetrafluoroethylene or modified polytetrafluoroethylene.

## In the Drawing

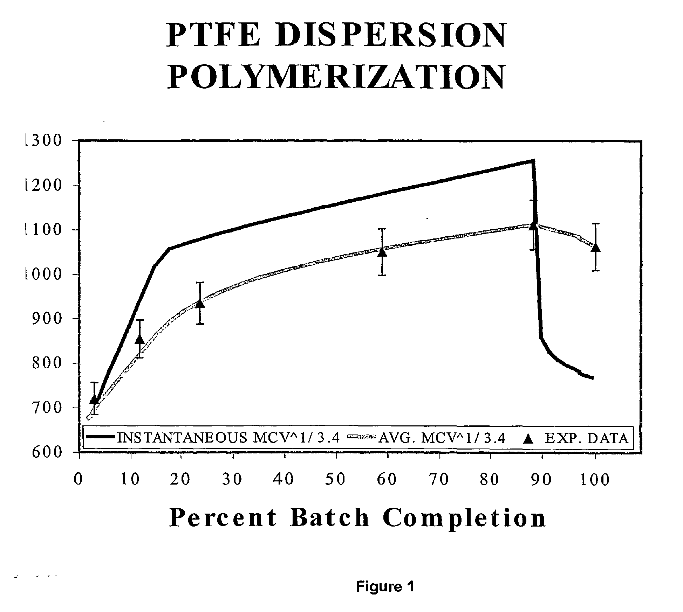

Figure 1 is a graph depicting polytetrafluoroethylene (PTFE) dispersion polymerization characteristics of the present invention.

## Detailed Description of the Invention

### Polyamide

The polyamide used in this invention may be any polyamide and is 25-90% or preferably 30-70% or more preferably 30-55% of the composition (all percentages in this and subsequent sections are weight percent unless designated otherwise). The polyamides generally have molecular weights of over 10,000 and can be produced by the condensation of equimolar amounts of at least one dicarboxylic acid and at least one diamine, in which the diamine can be employed, if desired, to provide an excess of amine end groups over carboxylic acid end groups in the polyamide. Alternatively, the diacid can be used to provide an excess of acid end groups. Equally well, these polyamides may be made from acid-forming and amine-forming derivatives of said acids and amines such as esters, acid chlorides, amine salts, etc. Representative dicarboxylic acids used to make the polyamides include, but are not limited to, adipic acid, terephthalic acid, isophthalic acid, pimelic acid, azelaic acid, suberic acid, sebacic acid, and dodecanedioic acid, while representative aliphatic diamines include, but are not limited to, diaminobutane, hexamethylenediamine, octamethylenediamine, nonamethylenediamine, decamethylenediamine, and dodecamethylenediamine. In addition, these polyamides can also be prepared from the self-condensation of a lactam. Suitable polyamide copolymers could also be synthesized by condensation and ring opening polymerization, as will be understood by those skilled in the art.

An example of a suitable polyamide is a copolyamide composed of 20-80 mole % of units derived from hexamethylene terephthalamide and 80-20 mole % of units derived from hexamethylene adipamide. This polyamide is referred to hereinafter as 6T/66 copolymer.

There are no particular limitations on the process for the production of the polyamide or copolyamide used in the composition of the present invention. It may be produced easily by ordinary melt polymerization. One method to produce the copolymer of this invention is an autoclave one-step polymerization process taught in US Patent No. 5,378,800 which is incorporated by reference herein. That process includes feeding to a reactor an aqueous salt solution of an admixture of desired diacids and diamines, heating the solution under pressure, reducing the pressure, maintaining the reaction mixture at a pressure that is not greater than about atmospheric pressure, and discharging the polyamide from the reactor. An alternative process includes preparing a prepolymer and subjecting the prepolymer to solid-phase polymerization or melt-mixing in an extruder to increase the degree of polymerization. The prepolymer is prepared by heating at 150°C-320°C an aqueous solution containing 6T salt (a salt formed from hexamethylenediamine and terephthalic acid) and 66 salt (a salt formed from hexamethylenediamine and adipic acid). An alternative process consists of subjecting 6T salt and 66 salt directly to solid-phase polymerization at a temperature lower than the melting point.

### Filler or Reinforcing Agent

The composition of the present invention contains 5-60% or preferably 10-50% or more preferably 15-45% of an inorganic filler or reinforcing agent that includes, for example, fibrous reinforcement such as glass fiber and carbon fiber, glass beads, talc, kaolin, wollastonite and mica. Preferable among them is glass fiber. Glass fibers suitable for use in the present invention are those generally used as a reinforcing agent for thermoplastics resins and thermosetting resins. Preferred glass fiber is in the form of glass rovings, glass chopped strands, and glass yarn made of continuous glass filaments 3-20 micron meters in diameter.

Non-Melt-Processable Core-Shell Fluoropolymer

*Background and description of the polymer*

The composition of the current invention contains about 0.1-10% or preferably about 0.1-2% or more preferably about 0.2-0.5% of a non-melt-processable core-shell fluoropolymer drip suppressant and processing aid.

The fluoropolymer additive of this invention relates to fluoropolymer particles that comprise a core of high molecular weight polytetrafluoroethylene (PTFE) and a shell of lower molecular weight polytetrafluoroethylene or modified polytetrafluoroethylene.

Polytetrafluoroethylene (PTFE) refers to the polymerized tetrafluoroethylene by itself without any significant comonomer present. Modified PTFE refers to copolymers of TFE with such small concentrations of comonomer that the melting point of the resultant polymer is not substantially reduced below that of PTFE. The concentration of such comonomer is preferably less than 1 weight %, more preferably less than 0.5 weight %. The modifying comonomer can be, for example, hexafluoropropylene (HFP), perfluoro(methyl vinyl ether) (PMVE), perfluoro(propyl vinyl ether) (PPVE), perfluoro(ethyl vinyl ether) (PEVE), chlorotrifluoroethylene (CTFE), perfluorobutyl ethylene (PFBE), or other monomer that introduces side groups into the molecule.

The fluoropolymer particles of this invention have a standard specific gravity (SSG) of less than 2.225, preferably less than 2.220, and more preferably from 2.180 to 2.215. The SSG is generally inversely proportional to the molecular weight of PTFE or modified PTFE. SSG alone, however, cannot specify molecular weight as it is also dependent on the presence of modifier, the amount of modifier, and/or initiation by hydrocarbon initiators such as disuccinic acid peroxide (DSP). Also no agreement exists as to the correct mathematical form the relationship takes. The first representation of that relationship is expressed in a paper presented by Doban et al. at an ACS meeting on September 18,1956 which gives the number average molecular weight to be

$$\overline{M_n} = 0.597\,[\,\log_{10}(0.157/(2.306 - SSG)]^{-1}$$

with graphical data given in Sperati & Starkwather, Fortschr. Hochpolym-Forsch. Vol. 2, pp. 465-495 (1961). Another expression of this relationship is stated by Noda et al. in U.S. Patent 5,324,785 as:

$$\log_{10}M_n = 31.83-11.58 \times SSG$$

in which $M_n$ is average molecular weight. These equations result in different molecular weights for the same SSG values.

Molecular weight can be more consistently related to melt creep viscosity (MCV) values for PTFE polymers and melt creep viscosity is used in the present application to describe the molecular weight of the polymer. Molecular weight is linearly related to melt viscosity in Pa·s to the 1/3.4 power as stated in the following:

$$\overline{M_n} = (MCV^{1/3.4} - 663.963)/0.00021967$$

Melt creep viscosities for the fluoropolymer in accordance with the invention are preferably greater than about $1.4 \times 10^{10}$ Pa·s, more preferably greater than about $1.5 \times 10^{10}$ Pa·s. Melt creep viscosity in this application is measured by the procedure U.S. Patent 3,819,594 with certain modifications discussed below.

The fluoropolymer used herein is made by dispersion polymerization (also known as emulsion polymerization). The product of dispersion polymerization is used after coagulation, isolation from the liquid medium, and drying.

In the manufacture of polymers in accordance with the invention, the polymerization is carried out to form a particle structure in which molecular weight, and in some embodiments, composition vary from one stage of polymerization to another. The variation can be can be envisioned so as to view the particle as having discrete layers. While the properties of the "core" and "shell" cannot be measured independently by analytical methods, these concepts are equated with polymer formed, respectively, in first and later stages in the polymerization. The process produces PTFE of high molecular weight at the core of the particle and PTFE or modified PTFE of lower molecular weight near and/or at the surface of the dispersion particles. As will be discussed below, the distinction made herein between core and shell relates to the amount of initiator present during the first (core) stage of polymerization and during the later (shell) stage of polymerization as well as the presence or absence of telogenic agent and comonomer being introduced.

Particularly because of the core-shell nature of the fluoropolymers used herein, the melt creep viscosity measured at the end of the batch is a weighted average of melt creep viscosities of the PTFE formed during the batch. For a growing particle, each incremental volume with its molecular weight contributes to the average. If, for instance, the molecular weight is increasing during the batch, each incremental volume has a higher molecular weight than the last incremental volume and the

average molecular weight is always lower than that of the last volume increment. The molecular weight of a volume increment is termed the instantaneous molecular weight and the number average molecular weight is given by the expression

$$\overline{M_n} = \frac{\lim_{n\to\infty}\sum_{i=1}^{n} M_{ni}\ \Delta V}{\lim_{n\to\infty}\sum_{i=1}^{n}\Delta V}$$

where $M_{ni}$ is the instantaneous molecular weight and $\Delta V$ is a volume or weight increment. The instantaneous molecular weight for each volume increment is a value selected such that a numerically integrated solution of the above expression yields the experimentally determined average molecular weight at any point during the batch.

For the purposes of the present invention, the average molecular weight $M_n$ of the shell is determined by the numerical integration, using at least 5 volume or weight increments beginning with and including the increment in which the $M_{ni}$ is the highest and concluding with the end of the batch. The $M_n$ for the core is determined similarly using at least 30 volume or weight increments beginning with the start of polymerization and ending with and including the increment in which the $M_{ni}$ is the highest. Average melt creep viscosity is then determined using the formula stated above for the relationship of melt creep viscosity to $M_n$.

In accordance with a preferred form of the invention, the core of the particles comprises high molecular weight polytetrafluoroethylene having an average melt creep viscosity of greater than about $1.2 \times 10^{10}$ Pa·s, more preferably having an average melt creep viscosity greater than about $1.3 \times 10^{10}$ Pa·s, most preferably having an average melt creep viscosity greater than about $1.5 \times 10^{10}$ Pa·s. The shell preferably comprises lower molecular weight polytetrafluoroethylene or modified polytetrafluoroethylene with an average melt creep viscosity greater than about $9 \times 10^{9}$ Pa·s and less than the average melt creep viscosity of polytetrafluoroethylene of the core. Preferably, the average melt creep viscosity of the polytetrafluoroethylene or modified polytetrafluoroethylene of the shell is at least $0.1 \times 10^{10}$ Pa·s less, more preferably at least $0.2 \times 10^{10}$ Pa·s less, than the average melt creep viscosity of polytetrafluoroethylene of the core. Most preferably, the shell of lower molecular weight polytetrafluoroethylene or modified polytetrafluoroethylene has an average melt creep viscosity of about $9 \times 10^{9}$ Pa·s to about $1.3 \times 10^{10}$ Pa·s.

In fluoropolymers in accordance with the invention, the shell comprises about 5 to about 30% by weight of the particles. Preferably, the shell comprises about 5 to about 25% by weight of the particles, most preferably, about 5 to about 20% by weight of the particles. Preferably, the shell of the particles is polytetrafluoroethylene.

The average batch particle size is between 200 to 350 nm as measured by Laser Light Scattering techniques.

Fluoropolymers in accordance with the invention have the general character of known PTFE polymers made by dispersion polymerization processes. The resins of this invention isolated from dispersion and dried are non-melt-processible. By non-melt-processible, it is meant that no melt flow is detected when tested by the standard melt viscosity determining procedure for melt-processible polymers. This test is according to ASTM D-1238-00 modified as follows: The cylinder, orifice and piston tip are made of corrosion resistant alloy, Haynes Stellite 19, made by Haynes Stellite Co. The 5.0 g sample is charged to the 9.53 mm (0.375 inch) inside diameter cylinder which is maintained at 372 °C. Five minutes after the sample is charged to the cylinder, it is extruded through a 2.10 mm (0.0825 inch diameter), 8.00 mm (0.315 inch) long square-edge orifice under a load (piston plus weight) of 5000 grams. This corresponds to a shear stress of 44.8 KPa (6.5 pounds per square inch). No melt extrudate is observed.

In accordance with this invention, the fluoropolymer is fibrillating. Fine powder resin isolated from dispersion and dried can be formed into useful articles by a lubricated extrusion process known as paste extrusion. The resin is blended with a lubricant and then shaped by an extrusion process. The beading obtained is coherent and microscopic examination reveals that many particles are linked by fibrils of PTFE which have been formed despite the procedure being conducted well below the melt temperature. Thus by "fibrillating", it is meant that a lubricated resin forms a continuous extrudate when extruded through a 1600:1 reduction die at 18.4 weight percent of a hydrocarbon lubricant fluid consisting predominantly of $C_{11}$-$C_{12}$ isoparaffinic hydrocarbons having a boiling range of 177-197°C, an aniline point of 80-90°C as determined by ASTM D611, more specifically the isoparaffin lubricant sold under the trademark Isopar® K by ExxonMobil Chemical. A further strengthening of the beading beyond the "green strength" obtained by fibrillation is accomplished by sintering after the lubricant has been volatized.

The polymers of the invention include fluoropolymer particles having a melt creep viscosity of greater than about 1.4 x $10^{10}$ Pa·s. In further embodiments these polymers include rod-shaped polymer particles have a number average diameter of less than about 150 nm. Preferably the fluoropolymer particles have a number average length of about 220 to about 500 nm and a number average diameter of about 150 to about 300 nm.

*Polymerization process*

In accordance with the invention, a batch polymerization process is provided for producing a non-melt-processible polymer. The polymerization process preferably involves the steps of precharging deionized water to a stirred autoclave and precharging saturated hydrocarbon having more than 12 carbon atoms which is liquid under polymerization conditions (preferably paraffin wax) and a dispersing agent (fluorinated surfactant), preferably a perfluorinated carboxylic acid having 6 to 10 carbon atoms. The hydrocarbon acts as a stabilizer in the polymerization process, preventing or retarding the formation of coagulated polymer in the agitated system. The process further involves deoxygenating, pressurizing the autoclave with TFE to predetermined level, agitating, and bringing the system to desired temperature, e.g., 60° - 100°C.

To form the core, the polymerization is carried out in a first stage during which a first amount of free radical initiator, and additional dispersing agent (fluorinated surfactant) are added to the autoclave. The first amount of initiator preferably produces polytetrafluoroethylene having an average melt creep viscosity greater than about 1.2 x $10^{10}$ Pa·s, more preferably greater than about 1.3 x $10^{10}$ Pa·s, most preferably greater than about 1.5 x $10^{10}$ Pa·s. Preferably, the first amount of initiator produces polytetrafluoroethylene having an average melt creep viscosity of greater than about 1.0 x $10^{10}$ Pa·s before about 30% of the total tetrafluoroethylene has been polymerized (including the terafluoroethylene displaced from the vapor space by the volume of polymer grown). During the first stage of the polymerization, the addition of agents providing telogenic activity is preferably minimized and most preferably the first stage is carried out without adding telogenic agents. The polymerization proceeds and additional TFE is added to maintain pressure. Then, during the second stage of the reaction, a second amount of free radical initiator is added with a telogenic agent and, for modified PTFE, a comonomer. The second amount of initiator produces lower molecular weight polytetrafluoroethylene or modified polytetrafluoroethylene. Preferably, the average melt creep viscosity of the polytetrafluoroethylene or modified polytetrafluoroethylene of the shell is greater than about 9 x $10^9$ Pa·s and less than the average melt creep viscosity of the polytetrafluoroethylene of the core. Preferably, the average melt creep viscosity of the polytetrafluoroethylene or modified polytetrafluoroethylene of the shell is at least 0.1 x $10^{10}$ Pa·s less, more preferably at least 0.2 x $10^{10}$ Pa·s less than the average melt creep viscosity of polytetrafluoroethylene of the core. Most preferably, the polymer produced for the shell of lower molecular weight polytetrafluoroethylene or modified polytetrafluoroethylene has an average melt creep viscosity of about 9 x $10^9$ Pa·s to about 1.3 x $10^{10}$ Pa·s. The second amount of initiator is at least about 10 times the first amount of initiator, preferably at least about 25 times the first amount, more preferably at least about 50 times the first amount, and most preferably at least about 100 times the first amount. The second amount of initiator and telogenic agent are added before about 95% of the total tetrafluoroethylene are polymerized. The second amount of initiator and telogenic agent are preferably added when at least about 70% of the total TFE has been polymerized, more preferably at least about 75% and most preferably at least about 80%.

During the first stage of the reaction, a high molecular weight core of PTFE is formed that is preferably at least about 70% of the mass of the fluoropolymer particle, more preferably at least about 75%, and most preferably at least about 80%. During the second stage of the reaction a shell of low molecular weight PTFE or modified PTFE is preferably formed that is complimentarily no more than about 30% of the mass of the fluoropolymer particle, more preferably no more than about 25% and most preferably no more than about 20%.

When the desired amount of TFE is consumed, the feeds are stopped, the reactor is vented, and the raw dispersion is discharged from the polymerization vessel. The supernatant paraffin wax is removed and the dispersion is coagulated.

A graphic description of the process for an embodiment of this invention is illustrated in Figure 1. The graph is a plot of the melt creep viscosity (MVC) to the 1/3.4 power of a preferred dispersion polymerization process of this invention. The average MCV to the 1/3.4 power of the growing polymer is plotted against the percentage of total tetrafluoroethylene polymerized. It is to be noted that the percentages of total TFE consumed is analogous to the fraction of particle volume or weight formed.

As stated earlier, the MCV is can be correlated with the molecular weight of the polymer. Curve A, labeled "Avg. MCV^1/3.4", represents the average MCV to the 1/3.4 power of polymer at various stages in the completion of the batch polymerization. All references in this application to % completion of batch polymerization include the terafluoroethylene displaced from the vapor space by the volume of polymer grown. In general the molecular weight of the batch increases until a decline of the curve begins at about 88% of total polymer formation. The increase of average MCV (increase in molecular weight) illustrates the formation of a high molecular weight core of PTFE in the first stage of the polymerization. The slight decrease of average MCV (decrease in molecular weight) towards the end of the polymerization is attributable to the formation of the lower molecular shell in the second stage of the reaction. For this embodiment the average MCV values of the polymer obtainable from Curve A indicate an average MCV of about $1.3 \times 10^{10}$ Pa·s at 30% completion; an average MCV of about $2.1 \times 10^{10}$ Pa·s at 88% completion and an average MCV of about $1.8 \times 10^{10}$ Pa·s at 100% completion. The maximum average MCV (maximum molecular weight) is obtained at about 88% completion just prior to the addition of telogenic agent and more initiator and shell formation. The final average MCV value at 100% completion is indicative of the high molecular weight desired for PTFE dispersions in use in order to achieve high flex life.

A more vivid illustration is represented by Curve B, labeled "Instantaneous MCV^1/3.4". Curve B is a theoretical depiction of the "instantaneous MCV" to the 1/3.4 power of polymer at various stages in the completion of the batch polymerization. The instantaneous MCV, as defined earlier, shows the effect of the changing recipe conditions on the volume increment growing on the surface of a particle at that instant. The instantaneous MCV and associated instantaneous molecular weight increases until the shell portion of the batch is begun. The precipitous decline of the instantaneous MCV reflects the addition of telogenic agents and added initiator. For this embodiment, the instantaneous MCV values of the polymer obtainable from Curve B indicate an instantaneous MCV of about $2.0 \times 10^{10}$ Pa·s at 30% completion; an instantaneous MCV of about $3.1 \times 10^{10}$ Pa·s at 88% completion and an instantaneous MCV of about $6.3 \times 10^{9}$ Pa·s at 100% completion. The dispersing agent used in this process is preferably a fluorinated surfactant. Preferably, the dispersing agent is a perfluorinated carboxylic acid having 6-10 carbon atoms and is typically used in salt form. Suitable dispersing agents are ammonium perfluorocarboxylates, e.g., ammonium perfluorocaprylate or ammonium perfluorooctanoate.

The initiators preferably used in the process of this invention are free radical initiators. They may be those having a relatively long half-life, preferably persulfates, e.g., ammonium persulfate or potassium persulfate. To shorten the half-life of persulfate initiators, reducing agents such as ammonium bisulfite or sodium metabisulfite, with or without metal catalysis salts such as Fe (III), can be used.

In addition to the long half-life persulfate initiators preferred for this invention, small amounts of short chain dicarboxylic acids such as succinic acid or initiators that produce succinic acid such as disuccinic acid peroxide (DSP) may be also be added in order to reduce coagulum.

To produce the high molecular weight PTFE core, preferably no telogenic agent is added in the first stage of the reaction. In addition, quantities of agents with telogenic activity are minimized. In contrast, in the second stage of the reaction, such agents in addition to more initiator are added to reduce the molecular weight of that reached in the core. As used herein, the term telogenic agent broadly refers to any agent that will prematurely stop chain growth and includes what is commonly known as chain transfer agents. The term chain transfer implies the stopping of growth of one polymer chain and the initiation of growth of another in that the number of growing polymer radicals remains the same and the polymerization proceeds at the same rate without the introduction of more initiator. A telogenic agent produces lower molecular weight polymer in its presence than in its absence and the number of polymer chain radicals growing either remains the same or decreases. In practice most agents, if present in sufficient quantities, tend to decrease the number of radicals and ultimately the polymerization rate. In order to maintain rate, addition of initiator with or near the time of the agent is desirable. The telogenic agents used in this invention to produce the low molecular weight shell are typically non-polar and may include hydrogen or an aliphatic hydrocarbon or halocarbon or alcohol having 1 to 20 carbon atoms, usually 1 to 8 carbon atoms, e.g., alkanes such as ethane, or chloroform or methanol. Also effective are mercaptans such as dodecylmercaptan.

In producing a shell of modified PTFE, in addition to telogenic agent, comonomer is added in the second stage of the reaction. As stated above typical comonomers include hexafluoropropylene (HFP), perfluoro(methyl vinyl ether) (PMVE), perfluoro(propyl vinyl ether) (PPVE), perfluoro(ethyl vinyl ether) (PEVE), chlorotrifluoroethylene (CTFE), and perfluorobutyl ethylene (PFBE).

Flame Retardant and Synergist

The resin composition of the present invention contains 5-35% percent or preferably 10-30% or more preferably 15-25% of a flame retardant. It can be a flame retardant based on brominated polystyrene and/or brominated poly(phenylene oxide) containing 50-70% by weight bromine. An alternate flame retardant is bis(hexachlorocyclopentaieno) cyclooctane, containing approximately 65 wt. % chlorine. A preferred flame retardant is brominated polystyrene or polydibromostyrene. Those having skill in the art will readily appreciate that other flame retardants containing different weight percentages of a halogen are useful in the practice of the invention.

According to the present invention, the bromine-containing flame retardant is used in combination with 1-10% or preferably 2-8% or more preferably 4-6% of an auxiliary flame retardant synergist. This may be selected from the group consisting of antimony trioxide, antimony pentoxide, sodium antimonate, zinc borate, and the like.

Other Additives

The compositions of this invention may optionally include up to two weight percent each of a mold-release agent, heat stabilizer, and/or color additive. Suitable mold release agents include aluminum stearate or other fatty acid salt. A wide variety of heat stabilizers can be selected by those skilled in the art; examples include copper(I) iodide or organic stabilizers such as Irganox® 1010 available from Ciba Specialty Chemicals. An example of a suitable color additive is carbon black.

Suitable compositions may also include up to 25 weight percent of one or more tougheners such as rubber, polyethylene, polypropylene, and/or Surlyn® ionomer (available from E.I. DuPont de Nemours and Co.).

Additional polymers may also be present in up to 40 weight percent. Such suitable polymers could include, but are not limited to, phenolic resins and poly(phenylene oxide).

## Examples

The present invention is illustrated by the following examples and comparative examples and representative experimental procedures.

## Preparation of Core-Shell Fluoropolymers

Representative procedures for preparing the core-shell PTFE fluoropolymers of this invention are given in the examples below.

Solids content of PTFE raw (as polymerized) dispersion are determined gravimetrically by evaporating a weighed aliquot of dispersion to dryness, and weighing the dried solids. Solids content is stated in weight % based on combined weights of PTFE and water. Alternately solids content can be determined by using a hydrometer to determine the specific gravity of the dispersion and then by reference to a table relating specific gravity to solids content. (The table is constructed from an algebraic expression derived from the density of water and density of as polymerized PTFE.) Raw dispersion particle size (RDPS) is measured by photon correlation spectroscopy.

Standard specific gravity (SSG) of PTFE fine powder resin is measured by the method of ASTM D-4895. If a surfactant is present, it can be removed by the extraction procedure in ASTM-D-4441 prior to determining SSG by ASTM D-4895.

Melt creep viscosity (MCV) is measured at 380°C by a modification of the tensile creep method disclosed in U.S. Patent 3,819,594, with the mold at room temperature, using a molding pressure of 200 kg/cm$^2$ (19.6 MPa), with the molding pressure held for 2 min, using a load (total weight suspended from the sample sliver) that varies with the MV to obtain a creep rate suitable for measurement, and waiting at least 30 min after application of the load for elastic response to be complete before selecting viscous response (creep) data for use in the calculation.

Copolymer Composition:

Comonomer content of the modified PTFE resins is determined by Fourier transform infrared spectroscopy using the method disclosed in U.S. Patent 4,837,267. For PPVE-modified PTFE, a multiplicative factor of 0.97 derived from the calibration curve is used to convert the ratio of the absorbance at 995 cm$^{-1}$ to that at 2365 cm$^{-1}$ to PPVE content in weight %.

Particle Size

Batch Particle Size RDPS is measured by Laser Light Scattering

Example 1: Preparation of Core-Shell PTFE A

This Example illustrates the polymerization of tetrafluroethylene (TFE) to make fluoropolymer of this invention having a high molecular weight core of PTFE with a low molecular weight shell of PTFE. A polykettle having a horizontal agitator and a water capacity of 240 parts by weight is charged with 123.5 parts of demineralized water and 5.82 parts of a paraffin wax supplied by Exxon. The contents of the polykettle are heated to 65°C, and the polykettle is evacuated and purged with TFE. Into the evacuated polykettle are charged 3.24 parts of a solution containing 0.0616 parts of ammonium perfluorooctanoate per part of solution. The contents of the polykettle are agitated at 50 rpm. The temperature is increased to 90°C. TFE is then added until the pressure is 2.72 MPa. Then, 1.29 parts of a fresh initiator solution of 0.01 part of disuccinyl peroxide and 0.00005 part of ammonium persulphate (APS) per part of water are added at the rate of 0.129 part/min. Once the pressure has declined by 0.1 MPa the batch is considered to have kicked off. TFE is added at a rate sufficient to maintain the pressure at 2.72 MPa. Once 8.81 parts of TFE have reacted after the kick off time, 6.47 parts of a 2.7 weight % C-8 solution is added at the rate of 0.324 part/min. TFE is added at a rate sufficient to maintain the pressure at 2.75 MPa. After 88.1 parts of TFE have been added following initial pressurization with TFE, an additional 3.24 parts of a solution of 0.005 parts of APS and 0.060 parts of methanol per part of solution is added at the rate of 0.647 part/min. The polymerization time from kickoff to the second initiator addition is 68 min. After 96.9 parts of TFE have been added, the TFE feed is stopped and the polykettle pressure is allowed to decrease to 0.79 MPa. Once that pressure has been reached the agitator is turned off and the batch vented. The length of the reaction, measured from kickoff to the cessation of agitation, is 87 min. The contents are discharged from the polykettle and the supernatant wax is removed. Solids content of the raw dispersion is 45.8 weight % and RDPS is 263 nm. The typical particle shape of the raw dispersion particles can be described as cylindrical with rounded ends. Only a small minority of the particles are spherical. Those particles whose ratio of axes is greater than 5 comprise 10% by number of the particles counted. If the counted particles are modeled as cylinders whose height is the long axis and whose diameter is the short axis the weight percent of these particle is 2.8%. By hand measurement, the rod-shaped particles have average dimensions of 900 nm of length and 68 nm in diameter. The average length of all particles is 413 nm and the average diameter is 183 nm.

5187 mL of the raw dispersion are charged to a 35 L cylindrical glass vessel with a tapered bottom fitted with a valve. The apparatus is equipped with a stirrer that is fitted with a pair of blending blades that are situated 5 1/2 inches apart on a single shaft, and positioned just above the tapered bottom of the vessel. The mixture is diluted to 19 L with demineralized water and the resulting dispersion has 15% solids. 250 mL of a 28% aqueous ammonium carbonate solution are added and stirring at 500 rpm is commenced. After 23 minutes, the dispersion forms a gel. After another three and a half minutes, the gel separates as the powder floats to the top of the mixture. After another three minutes, stirring is stopped and the mixture is drained from the bottom of the vessel into a 100 mesh stainless steel filter that collects the solids. The powder is dried in a vented oven at 150 °C.

The average melt creep viscosity of the core of the resin particles is 2.13 x $10^{10}$ Pa·s and the average melt creep viscosity of the shell of the resin particles is 9.3 x $10^9$ Pa·s. The core comprises 88.3% by weight of the particles, the shell comprising 11.7% by weight. The PTFE resin obtained has an SSG of 2.1917 and a melt creep viscosity of 19.5 x $10^9$ Pa·s.

## Blending of Core-Shell Fluoropolymers with Polyamides

Examples 2-9 and Comparative Examples 1-13 are compounded compositions. The components and their proportions as well as physical testing results are given in the following tables.

Materials Used

PA 66/6T refers to copolyamide made from terephthalic acid, adipic acid, and hexamethylenediamine with a melting point of ca. 315 °C.
Zytel® FE3757 refers to a lubricated polyamide 6,6 with a melting point of 265 °C produced by E.I. DuPont de Nemours, Inc.
Zytel® 101 refers to a polyamide 6,6 with a melting point of ca. 265 °C produced by E.I. DuPont de Nemours, Inc.
Lubricants refers to fatty-acid-based organic lubricants.
Synergist refers to 70 weight percent antimony trioxide in polyamide 6,6.
Surlyn® 8920 refers to a neutralized ethylene-methacrylic acid copolymer produced by E.I. DuPont de Nemours, Inc.
CN-2044C refers to a poly(dibromostyrene) available from Great Lakes Chemical Corporation.
Saytex HP7010 refers to a brominated polystyrene produced by the Albemarle Corporation.
PPG 3540 refers to glass fibers available from PPG Industries, Inc.
Black concentrate refers to a 50% carbon black color concentrate in a polymer carrier.
TE5112A refers to a low molecular weight, melt-processable FEP (tetrafluoroethylene/hexafluoropropylene copolymer) available from E.I. DuPont de Nemours, Inc.

TE5069AN refers to low molecular weight, melt-processable polytetrafluoroethylene available from E.I. DuPont de Nemours, Inc.

General Procedures

The resin mixtures are prepared by compounding on 40mm Werner and Pfleiderer twin-screw extruders at rate of 150 - 200 pounds per hour and 300 - 350 RPM. The glass fibers are side-fed and, as will be understood by those skilled in the art, the screw design is typical of those used for making glass-reinforced nylons. Exit the extruder, the polymer is passed through dies to make strands, which are frozen in a quench tank and subsequently chopped to make pellets.

If, prior to compounding, the core-shell PTFE or modified PTFE of this invention is blended with lubricants or hydrocarbons that are in the form of a powder, care should be taken to avoid agglomeration, which could result in poor dispersion of the additives into the polymer matrix.

The compounded flame retarded product is molded using typical laboratory size molding machines into typical ASTM and ISO testing bars.

The test bars are then tested following standard ASTM, ISO or UL testing protocols to measure various physical properties and flammability performance as is well understood by those skilled in the art.

Melt viscosities are measured on a Kayeness melt rheometer. Samples containing PA 66/6T are run at 325 °C and 1000 s$^{-1}$ and those containing Zytel® FE3757 are run at 280 °C 1000 s$^{-1}$.

Flammability testing is done according to UL Test No. UL-94; 20 mm Vertical Burning Test. The material is molded into 1/32 inch thick test bars, which are then conditioned for either 48 hours at 23 °C and 50% relative humidity or 168 hours at 70 °C. A conditioned bar is clamped into the testing apparatus and a flame is applied for 10 seconds then removed. The time that the bar burned is recorded. When the fire has extinguished itself, the flame is reapplied for another 10 seconds. The total burn time is recorded. In order for a material to receive a V-0 or V-1 rating, the total burn times must be less than or equal to 250 seconds. In addition, a piece of cotton is placed under the test bar. If part of the molten plastic drips and ignites the cotton, the material cannot receive a V-0 or V-1 rating.

Comparative Examples 1 and 2

These comparative examples demonstrate that the presence or absence of Surlyn® does not affect the melt viscosity of a reinforced polyamide resin composition.

|  | Comp. Ex. 1 | Comp. Ex. 2 |
|---|---|---|
| **PA 6T/66** | 42.45 | 43.45 |
| **Zinc borate** | 4.00 | 4.00 |
| **Lubricants** | 0.45 | 0.45 |
| **Surlyn® 8920** | 1 | 0 |
| **CN-2044C** | 22.1 | 22.1 |
| **PPG 3540** | 30 | 30 |
| **MV [Pa•s]** | 75.5 | 75.8 |
| **Tensile Strength [MPa]** | 179.0 | 189.7 |
| **Elongation [%]** | n.d. | 2.0 |
| **Flammability [48 h cond.]** | V-0 | V-0 |
| **Flammability [168 h cond.]** | HB | V-2 |

All ingredient quantities are given in weight percent.

Comparative Examples 3-5

These comparative examples demonstrate that the addition of either low molecular weight PTFE or low molecular weight FEP does not improve the melt viscosity of a reinforced polyamide resin composition.

|  | Comp. Ex. 3 | Comp. Ex. 4 | Comp. Ex. 5 |
|---|---|---|---|
| **PA 6T/66** | 41.78 | 41.28 | 41.26 |
| **Zinc borate** | 4.00 | 4.00 | 4.00 |
| **Lubricants** | 0.45 | 0.45 | 0.45 |
| **Surlyn® 8920** | 1.00 | 1.00 | 1.00 |
| **CN-2044C** | 22.10 | 22.10 | 22.10 |
| **PPG 3540** | 30.00 | 30.00 | 30.00 |
| **TE5112A** | 0 | 0.50 | 0 |
| **TE5069AN** | 0 | 0 | 0.50 |
| **Black Concentrate** | 0.67 | 0.67 | 0.67 |
| **MV [Pa•s]** | 86.9 | 83.6 | 93.0 |
| **Tensile Strength [MPa]** | 177.3 | 175.2 | 180.7 |
| **Elongation [%]** | 1.9 | 1.8 | 1.9 |

All ingredient quantities are given in weight percent.

Examples 2-9 and Comparative Examples 6-13

These examples and comparative examples demonstrate that a 10-30% reduction in melt viscosity can be obtained when core-shell PTFE's are included in reinforced polyamide compositions. They additionally demonstrate that the core-shell fluoropolymer prevented dripping during the flammability testing.

|  | Comp. Ex. 6 | Ex. 2 | Comp. Ex. 7 | Ex. 3 | Comp Ex.8 | Ex. 4 | Comp. Ex. 9 | Ex. 5 |
|---|---|---|---|---|---|---|---|---|
| **PA 6T/66** | 42.45 | 42.95 | 43.45 | 43.95 | 44.45 | 44.95 | 46.45 | 46.95 |
| **Zinc borate** | 4.00 | 4.00 | 4.00 | 4.00 | 4.00 | 4.00 | 4.00 | 4.00 |
| **Lubricants** | 0.45 | 0.45 | 0.45 | 0.45 | 0.45 | 0.45 | 0.45 | 0.45 |
| **Surlyn® 8920** | 1.00 | 0 | 1.00 | 0 | 1.00 | 0 | 1.00 | 0 |
| **CN-2044C** | 22.10 | 22.10 | 21.10 | 21.10 | 20.10 | 20.10 | 18.10 | 18.10 |
| **PPG 3540** | 30.00 | 30.00 | 30.00 | 30.00 | 30.00 | 30.00 | 30.00 | 30.00 |
| **Core-Shell PTFE** A | 0 | 0.50 | 0 | 0.50 | 0 | 0.50 | 0 | 0.50 |
| **MV [Pa•s]** | 74.7 | 61.9 | 79.2 | 63.3 | 85.2 | 64.0 | 84.3 | 59.0 |
| **Tensile Strength [Mpa]** | 182.4 | 198.7 | 180.9 | 199.8 | 178.0 | 201.0 | 176.1 | 200.3 |
| **Elongation [%]** | 2.0 | 2.2 | 2.0 | 2.2 | 2.0 | 2.2 | 2.2 | 2.2 |
| **Flammability [48 h cond.]** | V-0 | V-0 | V-1 | V-0 | V-1 | V-1 | V-0 | V-0 |
| **Flammability [168 h cond.]** | V-0 | V-0 | V-0 | V-1 | V-1 | V-1 | V-1 | V-1 |

All ingredient quantities are given in weight percent.

| | Comp. Ex. 10 | Ex. 6 | Comp. Ex. 11 | Ex. 7 | Comp. Ex. 12 | Ex. 8 | Comp. Ex. 13 | Ex 9 |
|---|---|---|---|---|---|---|---|---|
| Zytel® FE3757 | 43.00 | 44.00 | 45.00 | 46.00 | 47.00 | 48.00 | 49.00 | 50.00 |
| Synergist | 7.00 | 7.00 | 7.00 | 7.00 | 7.00 | 7.00 | 7.00 | 7.00 |
| Surlyn® 8920 | 1.50 | 0 | 1.50 | 0 | 1.50 | 0 | 1.50 | 0 |
| Saytex HP7010 | 23.50 | 23.50 | 21.50 | 21.50 | 19.50 | 19.50 | 17.50 | 17.50 |
| PPG 3540 | 25.00 | 25.00 | 25.00 | 25.00 | 25.00 | 25.00 | 25.00 | 25.00 |
| Core-Shell PTFE A | 0 | 0.50 | 0 | 0.50 | 0 | 0.50 | 0 | 0.50 |
| MV [Pa·s] | 184.2 | 157.1 | 180.0 | 154.6 | 173.2 | 155.8 | 177.7 | 145.9 |
| Tensile Strength [Mpa] | 166.3 | 162.5 | 168.6 | 167.1 | 169.2 | 168.8 | 169.6 | 172.0 |
| Elongation [%] | 2.9 | 2.8 | 3.0 | 3.0 | 2.9 | 3.0 | 3.1 | 3.1 |
| Flammability [48 h cond.] | V-0 | V-0 | V-0 | V-0 | V-2 | V-1 | V-1 | V-1 |
| Flammability [168 h cond.] | V-0 | V-0 | V-0 | V-1 | V-1 | V-1 | V-1 | V-1 |

All ingredient quantities are given in weight percent.

**Claims**

1. Polyamide molding compositions having lowered melt viscosities comprising, in weight percent, about

(a) 25 to 90% of a polyamide or polyamide blend;
(b) 5 to 60% of an inorganic filler or reinforcing agent;
(c) about 0.1 to 10% of non-melt-processible fluoropolymer particles having an SSG of less than about 2.225, said fluoropolymer particles comprising a core of high molecular weight polytetrafluoroethylene and a shell of lower molecular weight polytetrafluoroethylene or modified polytetrafluoroethylene; said fluoropolymer particles being fibrillating, wherein by fibrillating is meant that lubricated polytetrafluoroethylene particles form a continuous extrudate when extruded through a 1600:1 reduction die at 18.4 wt % hydrocarbon lubricant fluid Isopar® K, which consists predominantly of $C_{11}$-$C_{12}$ isoparaffinic hydrocarbons having a boiling range of 177-197°C, an aniline point of 80-90°C as determined by ASTM D611,
(d) 5 to 35% of a flame-retarding additive containing 50-70% bromine or chlorine; and
(e) 1 to 10% of a flame retardant synergist.

2. The composition of Claim 1 wherein the synergist is selected from antimony trioxide, antimony pentoxide, sodium antimonate, and zinc borate:

3. The composition of Claim 1 further comprising up to 2 weight percent of a mold release agent.

4. The composition of Claim 1 further comprising up to 2 weight percent of a heat or UV stabilizer.

5. An article formed from the composition of Claim 1.

6. The polyamide molding composition of claim 1 wherein the non-melt-processible fluoropolymer particles (c) are produced by a batch process comprising polymerizing tetrafluoroethylene in an aqueous medium in the presence a dispersing agent to produce fluoropolymer having an SSG of less than about 2.225, said polymerizing being carried out in a first stage during which a first amount of free radical initiator is added and a second stage during which a second amount of free radical initiator and a telogenic agent are added, said first amount of initiator producing polytetrafluoroethylene having an average melt creep viscosity greater than about 1.2 x $10^{10}$ Pa·s, and said second amount of initiator being at least about 10 times said first amount and being added before about 95% of the total tetrafluoroethylene has been polymerized, said second amount of initiator producing polytetrafluoroethylene or modified polytetrafluoroethylene.

7. The composition of claim 6 wherein in said process said first amount of initiator produces polytetrafluoroethylene having an average melt creep viscosity greater than about 1.3 x $10^{10}$ Pa·s.

8. The composition of claim 6 wherein in said process said first amount of initiator produces polytetrafluoroethylene having an average melt creep viscosity greater than about 1.5 x $10^{10}$ Pa·s.

9. The composition of claim 6 wherein in said process said first amount of initiator produces polytetrafluoroethylene having an average melt creep viscosity of greater than about 1.0 x $10^{10}$ Pa·s before about 30% of the total tetrafluoroethylene has been polymerized.

10. The composition of claim 6 wherein in said process said second amount of initiator produces polytetrafluoroethylene or modified polytetrafluoroethylene having an average melt creep viscosity greater than about 9 x $10^{9}$ Pa·s and less than the average melt creep viscosity of the polytetrafluoroethylene of said core.

11. The composition of claim 6 wherein in said process said second amount of initiator produces polytetrafluoroethylene or modified polytetrafluoroethylene having an average melt creep viscosity at least 0.1 x $10^{10}$ Pa·s less than the average melt creep viscosity of the polytetrafluoroethylene produced during said first stage.

12. The composition of claim 6 wherein in said process said second amount of initiator produces polytetrafluoroethylene or modified polytetrafluoroethylene having an average melt creep viscosity at least 0.2 x $10^{10}$ Pa·s less than the average melt creep viscosity of the polytetrafluoroethylene produced during said first stage.

13. The composition of claim 6 wherein in said process said second amount of initiator produces polytetrafluoroethylene or modified polytetrafluoroethylene having an average melt creep viscosity about 9 x $10^{9}$ Pa·s to about 1.3 x $10^{10}$ Pa·s.

14. The composition of claim 6 wherein in said process said second amount of initiator and said telogenic agent are added when at least about 70% of the total tetrafluoroethylene has been polymerized.

15. The composition of claim 1 wherein the average melt creep viscosity of the polytetrafluoroethylene of said core of said fluoropolymer particles (c) is greater than about 1.2 x $10^{10}$ Pa·s.

16. The composition of claim 1 wherein the average melt creep viscosity of the polytetrafluoroethylene of said core of said fluoropolymer particles (c) is greater than about 1.3 x $10^{10}$ Pa·s.

17. The composition of claim 1 wherein the average melt creep viscosity of the polytetrafluoroethylene of said core of said fluoropolymer particles (c) is greater than about 1.5 x $10^{10}$ Pa·s.

18. The composition of claim 1 wherein in said fluoropolymer particles (c) the average melt creep viscosity of the polytetrafluoroethylene or modified polytetrafluoroethylene of said shell is greater than about 9 x $10^{9}$ Pa·s and less than the average melt creep viscosity of polytetrafluoroethylene of said core.

19. The composition of claim 1 wherein in said fluoropolymer particles (c) the average melt creep viscosity of the polytetrafluoroethylene or modified polytetrafluoroethylene of said shell is at least 0.1 x $10^{10}$ Pa·s less than the average melt creep viscosity of polytetrafluoroethylene of said core.

20. The composition of claim 1 wherein in said fluoropolymer particles (c) the average melt creep viscosity of the polytetrafluoroethylene or modified polytetrafluoroethylene of said shell is at least 0.2 x $10^{10}$ Pa·s less than the average melt creep viscosity of polytetrafluoroethylene of said core.

21. The composition of claim 1 wherein the average melt creep viscosity of the polytetrafluoroethylene or modified polytetrafluoroethylene of said shell of said fluoropolymer particles (c) is about 9 x 10$^9$ Pa·s to about 1.3 x 10$^{10}$ Pa·s.

22. The composition of claim 1 wherein said shell of said fluoropolymer particles (c) comprises about 5 to about 30% by weight of said fluoropolymer particles.

23. The composition of claim 1 wherein said shell of said fluoropolymer particles (c) is polytetrafluoroethylene.

24. The composition of claim 1 wherein said fluoropolymer particles (c) have a melt creep viscosity of greater than about 1.4 x 10$^{10}$ Pa·s.

**Patentansprüche**

1. Polyamidformungszusammensetzungen, die reduzierte Schmelzviskositäten aufweisen, umfassend in Gewichtsprozent etwa

(a) 25 bis 90 % eines Polyamids oder einer Polyamidmischung;
(b) 5 bis 60 % eines anorganischen Füllstoffs oder Verstärkungsmittels;
(c) etwa 0,1 bis 10 % nicht schmelzverarbeitbare Fluorpolymerteilchen, die ein SSG (spezifisches Standardgewicht) von weniger als etwa 2,225 aufweisen, wobei die Fluorpolymerteilchen einen Kern von hochmolekularem Polytetrafluorethylen und eine Schale von niedermolekularem Polytetrafluorethylen oder modifiziertem Polytetrafluorethylen umfasst; wobei die Fluorpolymerteilchen fibrillierend sind; wobei Fibrillieren bedeutet, dass gleitfähig gemachte Polytetrafluorethylenteilchen ein kontinuierliches Extrudat bilden, wenn sie durch eine Reduktionsdüse von 1600:1 mit 18,4 Gew.-% Kohlenwasserstoff-Gleitmittelfluid Isopar® K extrudiert werden, das vorherrschend aus C$_{11}$-C$_{12}$-isoparaffinischen Kohlenwasserstoffen besteht, die einen Siedebereich von 177 - 197 °C, einen Anilinpunkt von 80 - 90 °C, wie ASTM D611 gemäß bestimmt, aufweisen;
(d) 5 bis 35 % eines Brandschutzadditivs, das 50 - 70 % Brom oder Chlor enthält; und
(e) 1 bis 10 % eines Brandschutzsynergisten.

2. Zusammensetzung nach Anspruch 1, wobei der Synergist unter Antimontrioxid, Antimonpentoxid, Natriumantimonat und Zinkborat ausgewählt wird.

3. Zusammensetzung nach Anspruch 1, des Weiteren bis zu 2 Gewichtsprozent eines Entformungshilfsmittels umfassend.

4. Zusammensetzung nach Anspruch 1, des Weiteren bis zu 2 Gewichtsprozent eines Wärme- oder UV-Stabilisators umfassend.

5. Gebrauchsgegenstand aus der Zusammensetzung nach Anspruch 1.

6. Polyamidformungszusammensetzung nach Anspruch 1, wobei die nicht schmelzverarbeitbaren Fluorpolymerteilchen (c) durch ein Chargenverfahren hergestellt werden, das das Polymerisieren von Tetrafluorethylen in einem wässrigen Medium in Gegenwart eines Dispergiermittels zur Bildung eines Fluorpolymers das ein SSG von weniger als etwa 2,225 aufweist, umfasst, wobei das Polymerisieren in einer ersten Stufe, während der eine erste Menge von Radikalinitiator hinzugegeben wird und einer zweiten Stufe durchgeführt wird, während der eine zweite Menge Radikalinitiator und eines telogenen Mittels hinzugegeben wird, wobei die erste Menge Initiator, der Polytetrafluorethylen herstellt, eine durchschnittliche Schmelzkriechviskosität von mehr als etwa 1,2 x 10$^{10}$Pa·s aufweist und die zweite Menge Initiator mindestens etwa das 10Fache der erste Menge beträgt und hinzugegeben wird, bevor etwa 95 % des gesamten Tetrafluorethylens polymerisiert worden sind, wobei die zweite Menge Initiator Polytetrafluorethylen oder modifiziertes Polytetrafluorethylen bildet.

7. Zusammensetzung nach Anspruch 6, wobei bei dem Verfahren die erste Menge Initiator Polytetrafluorethylen bildet, das eine durchschnittliche Schmelzkriechviskosität von mehr als etwa 1,3 x 10$^{10}$ Pa·s aufweist.

8. Zusammensetzung nach Anspruch 6, wobei bei dem Verfahren die erste Menge Initiator Polytetrafluorethylen bildet, das eine durchschnittliche Schmelzkriechviskosität von mehr als etwa 1,5 x 10$^{10}$ Pa·s aufweist.

9. Zusammensetzung nach Anspruch 6, wobei bei dem Verfahren die erste Menge Initiator Polytetrafluorethylen bildet, das eine durchschnittliche Schmelzkriechviskosität von mehr als etwa $1{,}0 \times 10^{10}$ Pa·s aufweist, bevor etwa 30 % des gesamten Tetrafluorethylens polymerisiert worden sind.

10. Zusammensetzung nach Anspruch 6, wobei bei dem Verfahren die zweite Menge Initiator Polytetrafluorethylen oder modifiziertes Polytetrafluorethylen bildet, das eine durchschnittliche Schmelzkriechviskosität von mehr als etwa $9 \times 10^{9}$ Pa·s und weniger als die durchschnittliche Schmelzkriechviskosität des Polytetrafluorethylens der Kerns aufweist.

11. Zusammensetzung nach Anspruch 6, wobei bei dem Verfahren die zweite Menge Initiator Polytetrafluorethylen oder modifiziertes Polytetrafluorethylen bildet, das eine durchschnittliche Schmelzkriechviskosität aufweist, die mindestens $0{,}1 \times 10^{10}$ Pa·s geringer ist als die durchschnittliche Schmelzkriechviskosität des Polytetrafluorethylens, das während der ersten Stufe gebildet wird.

12. Zusammensetzung nach Anspruch 6, wobei bei dem Verfahren die zweite Menge Initiator Polytetrafluorethylen oder modifiziertes Polytetrafluorethylen bildet, das eine durchschnittliche Schmelzkriechviskosität aufweist, die mindestens $0{,}2 \times 10^{10}$ Pa·s geringer ist als die durchschnittliche Schmelzkriechviskosität des Polytetrafluorethylens, das während der ersten Stufe gebildet wird.

13. Zusammensetzung nach Anspruch 6, wobei bei dem Verfahren die zweite Menge Initiator Polytetrafluorethylen oder modifiziertes Polytetrafluorethylen bildet, das eine durchschnittliche Schmelzkriechviskosität von etwa $9 \times 10^{9}$ Pa·s bis etwa $1{,}3 \times 10^{10}$ Pa·s aufweist.

14. Zusammensetzung nach Anspruch 6, wobei bei dem Verfahren die zweite Menge Initiator und das telogene Mittel hinzugegeben werden, wenn mindestens etwa 70 % des gesamten Tetrafluorethylens polymerisiert worden sind.

15. Zusammensetzung nach Anspruch 1, wobei die durchschnittliche Schmelzkriechviskosität des Polytetrafluorethylens des Kerns der Fluorpolymerteilchen (c) höher als etwa $1{,}2 \times 10^{10}$ Pa·s ist.

16. Zusammensetzung nach Anspruch 1, wobei die durchschnittliche Schmelzkriechviskosität des Polytetrafluorethylens des Kerns der Fluorpolymerteilchen (c) höher als etwa $1{,}3 \times 10^{10}$ Pa·s ist.

17. Zusammensetzung nach Anspruch 1, wobei die durchschnittliche Schmelzkriechviskosität des Polytetrafluorethylens des Kerns der Fluorpolymerteilchen (c) höher als etwa $1{,}5 \times 10^{10}$ Pa·s ist.

18. Zusammensetzung nach Anspruch 1, wobei bei den Fluorpolymerteilchen (c) die durchschnittliche Schmelzkriechviskosität des Polytetrafluorethylens oder modifizierten Polytetrafluorethylens der Schale höher als etwa $9 \times 10^{9}$ Pa·s und geringer als die durchschnittliche Schmelzkriechviskosität des Polytetrafluorethylens des Kerns ist.

19. Zusammensetzung nach Anspruch 1, wobei bei den Fluorpolymerteilchen (c) die durchschnittliche Schmelzkriechviskosität des Polytetrafluorethylens oder modifizierten Polytetrafluorethylens der Schale mindestens $0{,}1 \times 10^{10}$ Pa·s geringer ist als die durchschnittliche Schmelzkriechviskosität des Polytetrafluorethylens des Kerns.

20. Zusammensetzung nach Anspruch 1, wobei bei den Fluorpolymerteilchen (c) die durchschnittliche Schmelzkriechviskosität des Polytetrafluorethylens oder modifizierten Polytetrafluorethylens der Schale mindestens $0{,}2 \times 10^{10}$ Pa·s geringer ist als die durchschnittliche Schmelzkriechviskosität des Polytetrafluorethylens des Kerns.

21. Zusammensetzung nach Anspruch 1, wobei die durchschnittliche Schmelzkriechviskosität des Polytetrafluorethylens oder modifizierten Polytetrafluorethylens der Schale der Fluorpolymerteilchen (c) etwa $9 \times 10^{9}$ Pa·s bis etwa $1{,}3 \times 10^{10}$ Pa·s beträgt.

22. Zusammensetzung nach Anspruch 1, wobei die Schale der Fluorpolymerteilchen (c) etwa 5 bis etwa 30 Gew.-%, auf die Fluorpolymerteilchen bezogen, umfasst.

23. Zusammensetzung nach Anspruch 1, wobei die Schale der Fluorpolymerteilchen (c) aus Polytetrafluorethylen besteht.

24. Zusammensetzung nach Anspruch 1, wobei die Fluorpolymerteilchen (c) eine Schmelzkriechviskosität von mehr als etwa $1{,}4 \times 10^{10}$ Pa·s aufweisen.

**Revendications**

1. Compositions de moulage à base de polyamide ayant des viscosités réduites à l'état fondu comprenant, en pourcentage en poids, environ

   (a) 25 à 90 % d'un polyamide ou d'un mélange de polyamides ;
   (b) 5 à 60 % d'une charge inorganique ou d'un agent de renfort ;
   (c) environ 0,1 à 10 % de particules de polymère fluoré ne pouvant pas être transformées à l'état fondu ayant une SSG inférieure à environ 2,225, lesdites particules de polymère fluoré comprenant un noyau de polytétrafluoroéthylène de poids moléculaire élevé et une enveloppe de polytétrafluoroéthylène ou de polytétrafluoroéthylène modifié de poids moléculaire inférieur ; lesdites particules de polymère fluoré étant fibrillées ; dans lesquelles par fibrillation est signifié que les particules de polytétrafluoroéthylène lubrifiées forment un extrudat continu, lorsque extrudées à travers une filière de réduction de 1600:1 à 18,4 % en poids de liquide lubrifiant du type hydrocarbure Isopar® K, qui consiste de manière prédominante en hydrocarbures isoparaffiniques en $C_{11}$-$C_{12}$ ayant une plage d'ébullition de 177 à 197°C, un point aniline de 80 à 90°C tel que déterminé selon la norme ASTM D611
   (d) 5 à 35 % d'un additif ignifuge contenant 50 à 70 % de brome ou de chlore ; et
   (e) 1 à 10 % d'un synergiste ignifuge.

2. Composition selon la revendication 1, dans laquelle le synergiste est choisi parmi le trioxyde d'antimoine, le pentoxyde d'antimoine, l'antimonate de sodium et le borate de zinc.

3. Composition selon la revendication 1, comprenant en outre jusqu'à 2 pour-cent en poids d'un agent de démoulage.

4. Composition selon la revendication 1, comprenant en outre jusqu'à 2 pour-cent en poids d'un agent de stabilisation thermique ou du rayonnement UV.

5. Article formé à partir de la composition selon la revendication 1.

6. Composition de moulage à base de polyamide selon la revendication 1, dans laquelle les particules de polymère fluoré ne pouvant pas être transformées à l'état fondu (c) sont produites à l'aide d'un procédé discontinu comprenant la polymérisation de tétrafluoroéthylène dans un milieu aqueux en la présence d'un agent de dispersion pour produire un polymère fluoré ayant une SSG inférieure à environ 2,225, ladite polymérisation étant conduite dans un premier stade durant lequel une première quantité d'initiateur de radicaux libres est ajoutée et un second stade durant lequel une seconde quantité d'initiateur de radicaux libres et un agent télogène sont ajoutés, ladite première quantité d'initiateur produisant du polytétrafluoroéthylène ayant une viscosité moyenne de fluage à l'état fondu supérieure à environ 1,2 x $10^{10}$ Pa•s, et ladite seconde quantité d'initiateur étant d'au moins environ 10 fois ladite première quantité et étant ajoutée, avant que environ 95 % du tétrafluoroéthylène total soit polymérisé, ladite seconde quantité d'initiateur produisant du polytétrafluoroéthylène ou du polytétrafluoroéthylène modifié.

7. Composition selon la revendication 6, dans laquelle dans ledit procédé ladite première quantité d'initiateur produit du polytétrafluoroéthylène ayant une viscosité moyenne de fluage à l'état fondu supérieure à environ 1,3 x $10^{10}$ Pa•s.

8. Composition selon la revendication 6, dans laquelle dans ledit procédé ladite première quantité d'initiateur produit du polytétrafluoroéthylène ayant une viscosité moyenne de fluage à l'état fondu supérieure à environ 1,5 x $10^{10}$ Pa•s.

9. Composition selon la revendication 6, dans laquelle dans ledit procédé ladite première quantité d'initiateur produit du polytétrafluoroéthylène ayant une viscosité moyenne de fluage à l'état fondu supérieure à environ 1,0 x $10^{10}$ Pa•s avant que environ 30 % du tétrafluoroéthylène total soit polymérisé.

10. Composition selon la revendication 6, dans laquelle dans ledit procédé ladite seconde quantité d'initiateur produit du polytétrafluoroéthylène ou du polytétrafluoroéthylène modifié ayant une viscosité moyenne de fluage à l'état fondu supérieure à environ 9 x $10^{10}$ Pa•s et inférieure à la viscosité moyenne de fluage à l'état fondu du polytétrafluoroéthylène dudit noyau.

11. Composition selon la revendication 6, dans laquelle dans ledit procédé ladite seconde quantité d'initiateur produit du polytétrafluoroéthylène ou du polytétrafluoroéthylène modifié ayant une viscosité moyenne de fluage à l'état fondu d'au moins 0,1 x $10^{10}$ Pa•s inférieure à la viscosité moyenne de fluage à l'état fondu du polytétrafluoroéthylène produit durant ledit premier stade.

12. Composition selon la revendication 6, dans laquelle dans ledit procédé ladite seconde quantité d'initiateur produit du polytétrafluoroéthylène ou du polytétrafluoroéthylène modifié ayant une viscosité moyenne de fluage à l'état fondu d'au moins $0,2 \times 10^{10}$ Pa•s inférieure à la viscosité moyenne de fluage à l'état fondu du polytétrafluoroéthylène produit durant ledit premier stade.

13. Composition selon la revendication 6, dans laquelle dans ledit procédé, ladite seconde quantité d'initiateur produit du polytétrafluoroéthylène ou du polytétrafluoroéthylène modifié ayant une viscosité moyenne de fluage à l'état fondu d'environ $9 \times 10^{9}$ Pa•s jusqu'à environ $1,3 \times 10^{10}$ Pa•s.

14. Composition selon la revendication 6, dans laquelle dans ledit procédé, ladite seconde quantité d'initiateur et ledit agent télogène sont ajoutés lorsqu'au moins environ 70 % du tétrafluoroéthylène total a été polymérisé.

15. Composition selon la revendication 1, dans laquelle la viscosité moyenne de fluage à l'état fondu du polytétrafluoroéthylène dudit noyau desdites particules de polymère fluoré (c) est supérieure à environ $1,2 \times 10^{10}$ Pa•s.

16. Composition selon la revendication 1, dans laquelle la viscosité moyenne de fluage à l'état fondu du polytétrafluoroéthylène dudit noyau desdites particules de polymère fluoré (c) est supérieure à environ $1,3 \times 10^{10}$ Pa•s.

17. Composition selon la revendication 1, dans laquelle la viscosité moyenne de fluage à l'état fondu du polytétrafluoroéthylène dudit noyau desdites particules de polymère fluoré (c) est supérieure à environ $1,5 \times 10^{10}$ Pa•s.

18. Composition selon la revendication 1, dans laquelle dans lesdites particules de polymère fluoré (c) la viscosité moyenne de fluage à l'état fondu du polytétrafluoroéthylène ou du polytétrafluoroéthylène modifié de ladite enveloppe est supérieure à environ $9 \times 10^{9}$ Pa•s et inférieure à la viscosité moyenne de fluage à l'état fondu du polytétrafluoroéthylène dudit noyau.

19. Composition selon la revendication 1, dans laquelle dans lesdites particules de polymère fluoré (c) la viscosité moyenne de fluage à l'état fondu du polytétrafluoroéthylène ou du polytétrafluoroéthylène modifié de ladite enveloppe est au moins $0,1 \times 10^{10}$ Pa•s inférieure à la viscosité moyenne de fluage à l'état fondu du polytétrafluoroéthylène dudit noyau.

20. Composition selon la revendication 1, dans laquelle dans lesdites particules de polymère fluoré (c) la viscosité moyenne de fluage à l'état fondu du polytétrafluoroéthylène ou du polytétrafluoroéthylène modifié de ladite enveloppe est au moins $0,2 \times 10^{10}$ Pa•s inférieure à la viscosité moyenne de fluage à l'état fondu du polytétrafluoroéthylène dudit noyau.

21. Composition selon la revendication 1, dans laquelle la viscosité moyenne de fluage à l'état fondu du polytétrafluoroéthylène ou du polytétrafluoroéthylène modifié de ladite enveloppe desdites particules de polymère fluoré (c) est d'environ $9 \times 10^{9}$ Pa•s jusqu'à environ $1,3 \times 10^{10}$ Pa•s.

22. Composition selon la revendication 1, dans laquelle ladite enveloppe desdites particules de polymère fluoré (c) comprend environ 5 à environ 30 % en poids desdites particules de polymère fluoré.

23. Composition selon la revendication 1, dans laquelle ladite enveloppe desdites particules de polymère fluoré (c) est du polytétrafluoroéthylène.

24. Composition selon la revendication 1, dans laquelle lesdites particules de polymère fluoré (c) ont une viscosité de fluage à l'état fondu supérieure à environ $1,4 \times 10^{10}$ Pa•s.

# PTFE DISPERSION POLYMERIZATION

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0069967 W
- EP 0758010 A1
- WO 012197 A1
- RO 88741
- US 5378800 A
- US 5324785 A, Noda
- US 3819594 A
- US 4837267 A

### Non-patent literature cited in the description

- **Doban et al.** *ACS meeting,* 18 September 1956
- **Sperati ; Starkwather.** *Fortschr. Hochpolym-Forsch.,* 1961, vol. 2, 465-495